# FASCICULE DE BREVET EUROPEEN

(11) **EP 3 769 161 B1**
(45) Date de publication et mention de la délivrance du brevet: **13.04.2022**
(21) Numéro de dépôt: 19716572.3
(22) Date de dépôt: 15.03.2019
(51) Int. Cl.: G04B 17/06, F16F 1/02

(54) **PROCEDE DE FABRICATION DE SPIRAUX HORLOGERS THERMOCOMPENSES DE RAIDEUR PRECISE**
HERSTELLUNGSVERFAHREN VON THERMOKOMPENSIERTEN SPIRALEN MIT EXAKTER STEIFIGKEIT
METHOD FOR MANUFACTURING THERMOCOMPENSATED HAIRSPRINGS WITH PRECISE STIFFNESS

(30) Priorité: 20.03.2018 EP 18162723
(43) Date de publication de la demande: 27.01.2021
(73) Titulaire: Patek Philippe SA Genève, 1204 Genève (CH)
(72) Inventeur: MAIER, Frédéric, 2000 Neuchâtel (CH); JEANNERET, Sylvain, 2013 Colombier (CH)
(74) Mandataire: Micheli & Cie SA
(86) Numéro de dépôt international: PCT/IB2019/052107
(87) Numéro de publication internationale: WO 2019/180558

(56) Documents cités:
- EP-A1- 2 104 006
- EP-A1- 3 181 938
- EP-A1- 3 181 939

## Description

La présente invention concerne un procédé de fabrication de spiraux horlogers thermocompensés, plus précisément de spiraux horlogers thermocompensés destinés à équiper des balanciers pour former avec ces derniers des oscillateurs horlogers mécaniques.

On connaît par le brevet EP 1422436 un spiral horloger thermocompensé comprenant une âme et une couche revêtant l'âme, la couche étant constituée d'un matériau dont le coefficient thermique du module d'élasticité est de signe opposé à celui du matériau de l'âme. La couche compense ainsi les variations du module d'élasticité de l'âme en fonction de la température et son épaisseur peut être choisie suffisante pour compenser aussi les variations du moment d'inertie du balancier, afin que la fréquence de l'oscillateur soit insensible à la température. Dans un exemple typique, l'âme est en silicium monocristallin et la couche de compensation thermique en oxyde de silicium.

Dans les demandes de brevet EP 3181938 et EP 3181939 sont décrits des procédés permettant de fabriquer un spiral horloger de raideur prédéterminée. Dans le procédé selon EP 3181938, a) on forme un spiral dans des dimensions supérieures aux dimensions nécessaires pour obtenir le spiral de raideur prédéterminée, b) on détermine la raideur du spiral ainsi formé, c) on calcule l'épaisseur de matériau à retirer pour obtenir le spiral de raideur prédéterminée et d) on retire du spiral formé lors de l'étape a) l'épaisseur de matériau calculée. Dans le procédé selon EP 3181939, a) on forme un spiral dans des dimensions inférieures aux dimensions nécessaires pour obtenir le spiral de raideur prédéterminée, b) on détermine la raideur du spiral ainsi formé, c) on calcule l'épaisseur de matériau manquante pour obtenir le spiral de raideur prédéterminée et d) on modifie le spiral formé lors de l'étape a) pour compenser l'épaisseur de matériau manquante. Dans ces deux procédés la séquence d'étapes b), c), d) peut être répétée pour affiner la qualité dimensionnelle du spiral. Après l'étape d), une étape de compensation thermique est mise en oeuvre selon notamment l'enseignement du brevet précité EP 1422436.

Les procédés selon EP 3181938 et EP 3181939 permettent de diminuer les dispersions de fabrication entre spiraux réalisés à partir d'une même plaquette ou de plaquettes différentes. On constate néanmoins encore des différences de raideur entre les spiraux d'une même plaquette. En pratique, on réalise plusieurs centaines de spiraux sur chaque plaquette. Les spiraux obtenus sont ensuite classés en fonction de leur raideur. On peut ainsi prévoir plusieurs dizaines de classes, par exemple soixante, contenant chacune un certain nombre de spiraux. Les spiraux de chaque classe sont alors appairés avec des balanciers de classe correspondante - les balanciers sont en effet eux-mêmes classés en fonction de leur moment d'inertie - afin que chaque oscillateur balancier-spiral ait sensiblement une fréquence prédéterminée. Un réglage fin de la fréquence est ensuite effectué au moyen typiquement de masselottes portées par le balancier. Le grand nombre de classes dû notamment à la dispersion de raideur entre les spiraux impose de gérer des stocks importants de composants.

La présente invention vise à proposer un procédé de fabrication de spiraux horlogers thermocompensés qui permette de diminuer la dispersion de raideur entre les spiraux fabriqués à partir d'une même plaquette.

A cette fin, il est prévu un procédé de fabrication de spiraux horlogers comprenant les étapes successives suivantes :
a) former des spiraux dans une plaquette,
b) former une couche de compensation thermique sur les spiraux,
c) identifier les spiraux ayant une raideur comprise dans une plage prédéterminée,
d) optionnellement, détacher de la plaquette les spiraux identifiés à l'étape c),
e) modifier les autres spiraux pour que la raideur d'au moins une partie d'entre eux soit comprise dans la plage prédéterminée, et
f) détacher de la plaquette ces autres spiraux et, s'ils n'ont pas été détachés à l'étape d), les spiraux identifiés à l'étape c).

La présente invention permet une correction fine sur des spiraux terminés pour diminuer la dispersion d'un lot de fabrication. De plus, le procédé selon l'invention se prête bien à une fabrication industrielle où il est important de garder le plus longtemps possible les spiraux sur la plaquette.

D'autres caractéristiques et avantages de la présente invention apparaîtront à la lecture de la description détaillée suivante faite en référence aux dessins annexés dans lesquels :
- la figure 1 est un diagramme du procédé selon l'invention,
- la figure 2 est une vue en perspective d'une plaquette et d'un spiral formé dans la plaquette dans une première étape du procédé selon l'invention,
- la figure 3 est une vue en section d'une spire d'un spiral portant une couche de compensation thermique obtenu à une autre étape du procédé selon l'invention,
- la figure 4 est un diagramme montrant la dispersion, en matière de raideur, de spiraux obtenus à l'étape de la figure 3.

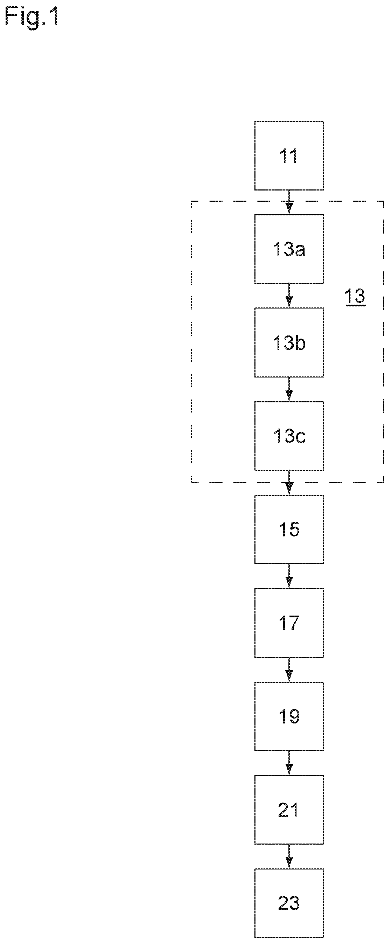

En référence à la figure 1, un procédé de fabrication de spiraux horlogers selon l'invention comprend des étapes successives 11 à 23. Lesdits spiraux sont notamment destinés à servir d'éléments de rappel élastique à des balanciers pour former avec ces derniers des oscillateurs horlogers mécaniques, en particulier pour montres-bracelets.

A l'étape 11, on se munit d'une plaquette (en anglais « wafer ») et on y grave des spiraux, par exemple par gravure ionique réactive profonde DRIE (« Deep Reactive Ion Etching ») ou par gravure laser. Dans des modes de réalisation préférés, la plaquette est en un matériau à base de silicium, par exemple en silicium proprement dit ou en un matériau multicouche du type silicium sur isolant SOI (« Silicon On Insulator ») comprenant une couche d'oxyde de silicium entre deux couches de silicium. Dans le cas du silicium sur isolant, les spiraux obtenus à la fin de l'étape 11 peuvent être multicouches : silicium - oxyde de silicium - silicium. Des spiraux multicouches peuvent aussi être réalisés en gravant une première partie de chaque spiral dans une première partie de plaquette et une deuxième partie de chaque spiral dans une deuxième partie de plaquette séparée de la première partie de plaquette, et en joignant ensuite les deux parties de plaquette. Plus de précisions sur la fabrication de spiraux multicouches peuvent être trouvées dans le document WO 2016/128694. On peut aussi partir d'une plaquette SOI, graver les spiraux uniquement dans sa couche supérieure de silicium puis enlever la couche inférieure de silicium et la couche intermédiaire d'oxyde de silicium, la plaquette avec laquelle se poursuit le procédé étant alors constituée de la couche supérieure de silicium.

De manière générale, dans la présente invention, le silicium peut être monocristallin, polycristallin ou amorphe. Il peut en outre être dopé. D'autres matériaux que les matériaux à base de silicium pourraient néanmoins être utilisés, tels qu'un verre, une céramique, un métal ou un alliage métallique.

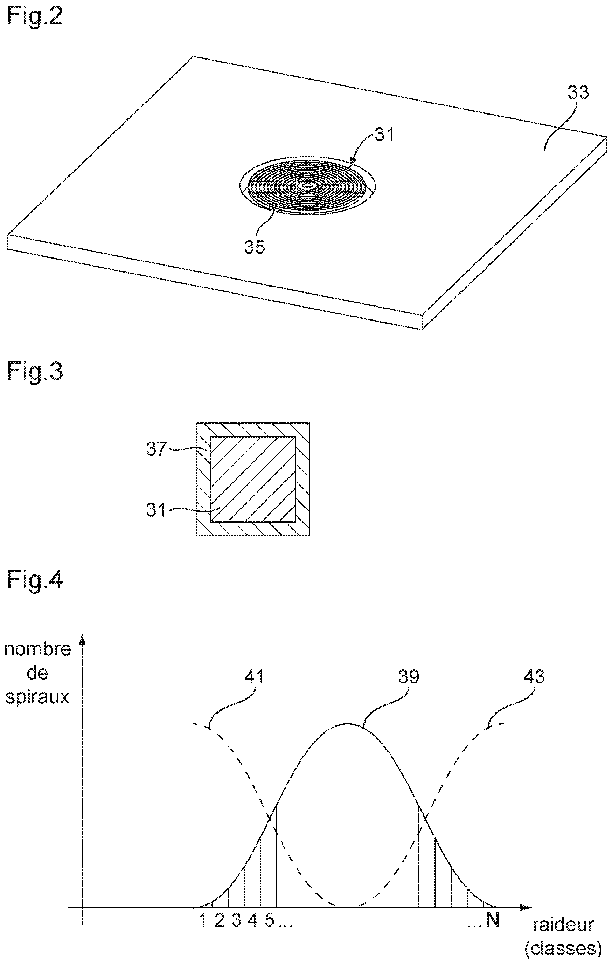

A la fin de l'étape 11, les spiraux gravés restent attachés à la plaquette par des ponts de matière, comme illustré à la figure 2 où par souci de simplification un seul spiral 31 a été représenté dans la plaquette 33, ce spiral étant attaché à la plaquette 33 par un pont de matière 35.

A l'étape 13, on applique le procédé décrit dans la demande de brevet EP 3181938 ou dans la demande de brevet EP 3181939, ces deux demandes de brevet étant incorporées à la présente demande par renvoi. Ainsi, on détermine une raideur représentative des spiraux gravés dans la plaquette (étape 13a), à partir du résultat de cette détermination on calcule une épaisseur de matériau à ajouter, à retirer ou à modifier sur les spiraux dans le but d'obtenir une raideur prédéterminée (étape 13b), et à partir de l'épaisseur de matériau calculée on modifie les spiraux dans le but d'obtenir la raideur prédéterminée (étape 13c), les étapes 13a, 13b et 13c pouvant être répétées une ou plusieurs fois.

La raideur déterminée à l'étape 13a peut être la raideur moyenne de l'ensemble des spiraux gravés dans la plaquette, la raideur moyenne d'un échantillon de ces spiraux ou la raideur d'un de ces spiraux. Pour un spiral donné, la raideur peut être déterminée en couplant le spiral, alors qu'il est ou non encore attaché à la plaquette, avec un balancier de moment d'inertie prédéterminé, en mesurant la fréquence de l'ensemble balancier-spiral et en déduisant de cette mesure, par calcul, la raideur du spiral. Il est notamment possible d'effectuer cette détermination de raideur sur tous les spiraux encore attachés à la plaquette et d'en calculer ensuite la moyenne, ou d'effectuer la détermination de raideur sur un échantillon des spiraux encore attachés à la plaquette et d'en calculer ensuite la moyenne, ou d'effectuer la détermination de raideur sur un échantillon de spiraux préalablement détachés de la plaquette et d'en calculer ensuite la moyenne, ces spiraux détachés étant sacrifiés pour la suite du procédé.

L'étape 13c est réalisée, de préférence simultanément, sur tous les spiraux attachés à la plaquette. Si à l'étape 11 les spiraux ont été gravés dans des dimensions supérieures aux dimensions nécessaires pour obtenir des spiraux ayant la raideur prédéterminée, l'étape 13c peut consister à retirer une épaisseur de matériau des spiraux, sur tout ou partie de leur surface externe, de manière homogène ou non. Si à l'étape 11 les spiraux ont été gravés dans des dimensions inférieures aux dimensions nécessaires pour obtenir des spiraux ayant la raideur prédéterminée, l'étape 13c peut consister à ajouter une épaisseur de matériau sur les spiraux, sur tout ou partie de leur surface externe, de manière homogène ou non.

Le retrait de matériau à l'étape 13c peut être réalisé par gravure, telle qu'une gravure humide, une gravure en phase vapeur, une gravure plasma ou une gravure laser. Dans le cas de spiraux à base de silicium, le retrait de matériau peut aussi être effectué en oxydant les spiraux, afin de transformer l'épaisseur de matériau à base de silicium à retirer en oxyde de silicium (SiO₂), et en éliminant ensuite l'oxyde de silicium. Pour oxyder les spiraux, on peut les placer dans un four et les soumettre à une température comprise entre 800 et 1200°C sous atmosphère oxydante.

L'ajout de matériau à l'étape 13c peut être réalisé par toute méthode additive, par exemple oxydation thermique, croissance galvanique, dépôt physique en phase vapeur, dépôt chimique en phase vapeur ou dépôt en couches atomiques. Le matériau déposé sur les spiraux peut être le même que celui de la plaquette ou peut être différent.

En alternative à l'ajout ou au retrait de matériau, on peut à l'étape 13c modifier une épaisseur de matériau calculée à l'étape 13b sans que cela modifie nécessairement les dimensions des spiraux. On peut notamment modifier la structure ou la composition sur une profondeur prédéterminée de tout ou partie de la surface externe des spiraux, par exemple par cristallisation, dopage ou diffusion d'atomes interstitiels ou de substitution.

A l'étape 15 du procédé selon l'invention, une couche de compensation thermique est formée sur les spiraux, de préférence sur toute leur surface externe, comme illustré à la figure 3 où la couche de compensation thermique est désignée par le repère 37. Cette couche de compensation thermique est en un matériau présentant un coefficient thermique du module d'élasticité de signe opposé à celui du matériau constituant les spiraux obtenus à l'issue de l'étape 13. Si les spiraux sont en un matériau à base de silicium, la couche de compensation thermique est typiquement en oxyde de silicium et peut être obtenue par oxydation thermique, en plaçant les spiraux dans un four pour les soumettre à une température comprise entre 800 et 1200°C et à une atmosphère oxydante. La couche de compensation thermique compense totalement ou en partie la variation du module d'élasticité des spiraux en fonction de la température. La couche de compensation thermique peut aussi surcompenser la variation du module d'élasticité des spiraux, afin de compenser également la variation en fonction de la température du moment d'inertie des balanciers que ces spiraux sont destinés à équiper et de rendre ainsi la fréquence des oscillateurs balancier-spiral insensible à la température.

A l'étape 17, on détermine la raideur de chacun des spiraux alors qu'ils sont encore attachés à la plaquette. Pour ce faire, pour chaque spiral, on couple le spiral avec un balancier de moment d'inertie prédéterminé, on mesure la fréquence de l'ensemble balancier-spiral et on déduit de cette mesure, par calcul, la raideur du spiral. En variante, on peut déterminer la raideur d'une partie seulement des spiraux et en déduire la raideur des autres spiraux. Par exemple, on peut déterminer la raideur de spiraux représentatifs de zones respectives de la plaquette, les spiraux d'une même zone ayant sensiblement la même raideur.

A ce stade du procédé selon l'invention, les raideurs des spiraux se répartissent en un nombre N de classes, par exemple soixante classes, selon une courbe de dispersion du type de la courbe 39 illustrée à la figure 4. La suite du procédé selon l'invention vise à réduire le nombre de classes. Dans ce but, on considère qu'une partie seulement des spiraux sont conformes, par exemple les N/2 premières classes ou les N/2 dernières classes, et on modifie les autres spiraux pour les rendre conformes. De cette manière on peut diviser par deux le nombre de classes.

Ainsi, à l'étape 19, les spiraux dont la raideur est comprise dans une plage prédéterminée, correspondant par exemple aux N/2 premières classes ou aux N/2 dernières classes, sont considérés comme conformes et sont détachés de la plaquette. Les autres spiraux sont laissés sur la plaquette.

A l'étape 21, les spiraux laissés sur la plaquette sont modifiés pour que leur raideur soit comprise dans la plage prédéterminée. Selon le choix de la plage prédéterminée, l'épaisseur de la couche de compensation thermique est augmentée ou diminuée pour tous les spiraux présents sur la plaquette, de préférence simultanément, afin de respectivement augmenter ou diminuer la raideur desdits spiraux. La valeur d'épaisseur à ajouter ou à retirer de la couche de compensation thermique peut être préalablement déterminée par calcul. La demanderesse a constaté en particulier que pour des spiraux formés d'une âme en silicium et d'une couche externe de compensation thermique en oxyde de silicium dont l'épaisseur est égale à 10% de l'épaisseur (largeur) de l'âme en silicium, une modification de seulement 5% de l'épaisseur de la couche de compensation thermique permettait de diviser par deux le nombre N de classes tout en respectant les exigences du COSC (Contrôle Officiel Suisse des Chronomètres) en matière de marche en fonction de la température, soit au maximum ±0,6 seconde/jour/degré. Cette réduction importante du nombre de classes allège la gestion des stocks de composants et diminue les coûts.

Sur la figure 4 on peut voir que si la plage prédéterminée de raideurs considérées comme conformes correspond aux N/2 premières classes, la modification des spiraux à l'étape 21 conduit à déplacer la courbe de dispersion des spiraux laissés sur la plaquette vers la gauche (courbe 41), de préférence sur une distance égale à la longueur de la plage prédéterminée afin que chacun de ces spiraux puisse appartenir à l'une des N/2 premières classes. Inversement, si la plage prédéterminée de raideurs considérées comme conformes correspond aux N/2 dernières classes, la modification des spiraux à l'étape 21 conduit à déplacer la courbe de dispersion des spiraux restant sur la plaquette vers la droite (courbe 43), de préférence sur une distance égale à la longueur de la plage prédéterminée afin que chacun de ces spiraux puisse appartenir à l'une des N/2 dernières classes. Les deux configurations illustrées à la figure 4 (courbes 41 et 43) sont les deux configurations optimales. Des configurations intermédiaires sont bien entendu possibles aboutissant à un nombre de classes global, pour les spiraux détachés de la plaquette et ceux encore attachés, supérieur à N/2 mais inférieur à N.

Pour augmenter l'épaisseur de la couche de compensation thermique à l'étape 21, on peut, dans le cas de spiraux comprenant une âme en matériau à base de silicium recouverte d'une couche de compensation thermique en oxyde de silicium, oxyder thermiquement les spiraux comme décrit ci-dessus en relation avec les étapes 13c et 15.

Pour diminuer l'épaisseur de la couche de compensation thermique à l'étape 21, on peut mettre en œuvre des techniques de gravure telles que la gravure en phase vapeur, la gravure plasma, la gravure humide (utilisant par exemple de l'acide fluorhydrique) ou la gravure laser.

En alternative à l'ajout ou au retrait de matériau de la couche de compensation thermique, on peut à l'étape 21 modifier la structure ou la composition de la couche de compensation thermique sur une profondeur prédéterminée sans que cela modifie nécessairement son épaisseur. Cette modification de structure ou de composition peut consister par exemple à doper la couche de compensation thermique par implantation, diffusion ou autre.

Dans des variantes, au lieu d'augmenter l'épaisseur de la couche de compensation thermique à l'étape 21, on peut déposer sur cette couche un matériau différent de celui de la couche de compensation thermique. Le dépôt peut être notamment un dépôt physique en phase vapeur, un dépôt chimique en phase vapeur ou un dépôt en couches minces atomiques. Le matériau différent de celui de la couche de compensation thermique peut être un métal, un oxyde, un nitrure ou autre.

A une dernière étape 23, les spiraux laissés dans la plaquette sont détachés. Tous les spiraux sont ensuite triés selon leur classe pour pouvoir être appairés avec des balanciers.

Dans une variante de l'invention, à l'étape 19 les spiraux identifiés comme conformes sont laissés sur la plaquette mais sont protégés, par exemple au moyen de masques, du traitement mis en œuvre à l'étape 21. Ainsi, à l'étape 21 seuls les spiraux considérés comme non conformes sont modifiés et à la dernière étape 23 tous les spiraux sont détachés de la plaquette.

## Revendications

1. Procédé de fabrication de spiraux horlogers comprenant les étapes successives suivantes :
a) former des spiraux dans une plaquette,
b) former une couche de compensation thermique sur les spiraux,
c) identifier les spiraux ayant une raideur comprise dans une plage prédéterminée,
d) optionnellement, détacher de la plaquette les spiraux identifiés à l'étape c),
e) modifier les autres spiraux pour que la raideur d'au moins une partie d'entre eux soit comprise dans la plage prédéterminée,
f) détacher de la plaquette ces autres spiraux et, s'ils n'ont pas été détachés à l'étape d), les spiraux identifiés à l'étape c).

2. Procédé selon la revendication 1, **caractérisé en ce que** l'étape e) est réalisée simultanément sur lesdits autres spiraux.

3. Procédé selon la revendication 1 ou 2, **caractérisé en ce que** l'étape e) comprend le fait de modifier la couche de compensation thermique.

4. Procédé selon l'une quelconque des revendications 1 à 3, **caractérisé en ce que** l'étape e) comprend le fait de modifier l'épaisseur de la couche de compensation thermique.

5. Procédé selon l'une quelconque des revendications 1 à 4, **caractérisé en ce que** l'étape e) comprend le fait d'augmenter l'épaisseur de la couche de compensation thermique.

6. Procédé selon l'une quelconque des revendications 1 à 4, **caractérisé en ce que** l'étape e) comprend le fait de diminuer l'épaisseur de la couche de compensation thermique.

7. Procédé selon l'une quelconque des revendications 1 à 6, **caractérisé en ce qu'**il comprend, entre les étapes a) et b), les étapes suivantes :
(i) déterminer une raideur représentative des spiraux formés dans la plaquette,
(ii) à partir du résultat de l'étape (i), modifier les spiraux dans le but d'obtenir une raideur prédéterminée.

8. Procédé selon la revendication 7, **caractérisé en ce que**, entre les étapes a) et b), la séquence des étapes (i) et (ii) est répétée une ou plusieurs fois.

9. Procédé selon l'une quelconque des revendications 1 à 8, **caractérisé en ce que** l'étape a) comprend une ou plusieurs étapes de gravure.

10. Procédé selon l'une quelconque des revendications 1 à 9, **caractérisé en ce que** les spiraux formés lors de l'étape a) sont en silicium ou comprennent au moins une couche de silicium.

11. Procédé selon la revendication 10, **caractérisé en ce que** la couche de compensation thermique est en oxyde de silicium.

12. Procédé selon l'une quelconque des revendications 1 à 9, **caractérisé en ce que** les spiraux formés lors de l'étape a) sont en verre, céramique, métal ou alliage métallique.

## Patentansprüche

1. Verfahren zur Herstellung von Uhrspiralen, das die folgenden aufeinanderfolgenden Schritte umfasst:
a) Bilden von Spiralen in einer Platte,
b) Bilden einer Temperaturkompensationsschicht auf den Spiralen,
c) Identifizieren der Spiralen, die eine Steifigkeit innerhalb eines vorbestimmten Bereichs aufweisen,
d) wahlweise Lösen der im Schritt c) identifizierten Spiralen von der Platte,
e) Abwandeln der anderen Spiralen, damit die Steifigkeit von mindestens einem Teil davon in dem vorbestimmten Bereich enthalten ist,
f) Lösen dieser anderen Spiralen und, wenn sie nicht im Schritt d) gelöst wurden, der im Schritt c) identifizierten Spiralen von der Platte.

2. Verfahren nach Anspruch 1, **dadurch gekennzeichnet, dass** der Schritt e) gleichzeitig auf den anderen Spiralen ausgeführt wird.

3. Verfahren nach Anspruch 1 oder 2, **dadurch gekennzeichnet, dass** der Schritt e) das Abwandeln der Temperaturkompensationsschicht umfasst.

4. Verfahren nach einem der Ansprüche 1 bis 3, **dadurch gekennzeichnet, dass** der Schritt e) das Abwandeln der Dicke der Temperaturkompensationsschicht umfasst.

5. Verfahren nach einem der Ansprüche 1 bis 4, **dadurch gekennzeichnet, dass** der Schritt e) das Erhöhen der Dicke der Temperaturkompensationsschicht umfasst.

6. Verfahren nach einem der Ansprüche 1 bis 4, **dadurch gekennzeichnet, dass** der Schritt e) das Vermindern der Dicke der Temperaturkompensationsschicht umfasst.

7. Verfahren nach einem der Ansprüche 1 bis 6, **dadurch gekennzeichnet, dass** es zwischen den Schritten a) und b) die folgenden Schritte umfasst:
(i) Bestimmen einer Steifigkeit, die für die in der Platte gebildeten Spiralen repräsentativ ist,
(ii) ausgehend von dem Ergebnis des Schritts (i), Abwandeln der Spiralen mit dem Ziel, eine vorbestimmte Steifigkeit zu erhalten.

8. Verfahren nach Anspruch 7, **dadurch gekennzeichnet, dass** zwischen den Schritten a) und b) die Folge der Schritte (i) und (ii) ein oder mehrere Male wiederholt wird.

9. Verfahren nach einem der Ansprüche 1 bis 8, **dadurch gekennzeichnet, dass** der Schritt a) einen oder mehrere Ätzschritte umfasst.

10. Verfahren nach einem der Ansprüche 1 bis 9, **dadurch gekennzeichnet, dass** die im Schritt a) gebildeten Spiralen aus Silizium sind oder mindestens eine Siliziumschicht umfassen.

11. Verfahren nach Anspruch 10, **dadurch gekennzeichnet, dass** die Temperaturkompensationsschicht aus Siliziumoxid besteht.

12. Verfahren nach einem der Ansprüche 1 bis 9, **dadurch gekennzeichnet, dass** die im Schritt a) gebildeten Spiralen aus Glas, Keramik, Metall oder Metalllegierung bestehen.

## Claims

1. Method for manufacturing timepiece hairsprings comprising the following successive steps:
a) forming hairsprings in a wafer,
b) forming a thermal compensation layer on the hairsprings,
c) identifying the hairsprings having a stiffness within a predetermined range,
d) optionally, detaching the hairsprings identified in step c) from the wafer,
e) modifying the other hairsprings so that the stiffness of at least some of them is within the predetermined range,
f) detaching from the wafer these other hairsprings and, if they have not been detached in step d), the hairsprings identified in step c).

2. Method as claimed in claim 1, **characterised in that** step e) is carried out simultaneously on said other hairsprings.

3. Method as claimed in claim 1 or 2, **characterised in that** step e) comprises modifying the thermal compensation layer.

4. Method as claimed in any one of claims 1 to 3, **characterised in that** step e) comprises modifying the thickness of the thermal compensation layer.

5. Method as claimed in any one of claims 1 to 4, **characterised in that** step e) comprises increasing the thickness of the thermal compensation layer.

6. Method as claimed in any one of claims 1 to 4, **characterised in that** step e) comprises reducing the thickness of the thermal compensation layer.

7. Method as claimed in any one of claims 1 to 6, **characterised in that** it comprises, between steps a) and b), the following steps:
(i) determining a stiffness representative of the hairsprings formed in the wafer,
(ii) from the result of step (i), modifying the hairsprings in order to obtain a predetermined stiffness.

8. Method as claimed in claim 7, **characterised in that** between steps a) and b), the sequence of the steps (i) and (ii) is repeated once or a plurality of times.

9. Method as claimed in any one of claims 1 to 8, **characterised in that** step a) comprises one or a plurality of etching steps.

10. Method as claimed in any one of claims 1 to 9, **characterised in that** the hairsprings formed in step a) are of silicon or comprise at least one silicon layer.

11. Method as claimed in claim 10, **characterised in that** the thermal compensation layer is of silicon oxide.

12. Method as claimed in any one of claims 1 to 9, **characterised in that** the hairsprings formed in step a) are of glass, ceramic, metal or metal alloy.
